# EUROPEAN PATENT APPLICATION

(11) **EP 1 162 813 A2**
(43) Date of publication of application: **12.12.2001**
(21) Application number: 01203334.6
(22) Date of filing: 24.09.1999
(51) Int. Cl.: H04M 3/00, H04L 12/24, H04Q 11/04, H04Q 3/00

(54) **Method and system for negotiating telecommunication resources**

(30) Priority: 25.09.1998 US 101857; 04.03.1999 CA 2264407
(62) Divisional of application: 99944208.0
(71) Applicant: Soma Networks, Inc., Toronto, Ontario N5V 1R2 (CA)
(72) Inventor: The designation of the inventor has not yet been filed
(74) Representative: Strachan, Victoria Jane

(57) **Abstract**

Current telecommunication service providers allow users to choose from a small selection of telecommunication services with predetermined performance parameters and prices. The invention provides a system in which service providers and users negotiate the parameters and prices of telecommunication services in real time, allowing the service providers and users to establish communications that better optimise their available resources and current needs. This is done by having software agents that represent each concerned party, negotiate the terms of the communication in real time. Further, the invention allows third parties to create new agent or negotiating discipline software available over the Internet, which will allow the technology to mature quickly, and to respond to new services and/or requirements.

## Description

The present invention relates generally to telecommunications, and more specifically, to a method and system of negotiating resources over telecommunication networks offering a variety of services.

### Background of the Invention

For a long time, telecommunication networks were comprised of single Service Providers making a single service available to Users. However, telecommunication networks have evolved greatly over the last two decades and continue to evolve, so that there are currently multiple providers offering multiple services on multiple levels. For example, data transmission methods and protocols now include Internet Protocol (IP), asynchronous transfer mode (ATM), frame relay, and digital telephony. Similarly, in the long distance voice telephone market there a large number of Service Providers who use various transmission means including analogue, digital and digital compression methods, over hard wire, wireless, fibre optic and satellite transmission means. The networks of these Service Providers are interconnected with others to form larger heterogeneous networks.

Determining the optimal means of communicating between two points over such telecommunication networks is a complex task, requiring consideration for the price, quality and availability of services, in view of the requirements of the communication desired. Presently, there is no system available which allows the optimal means of communication to be determined. Attempts have been made to provide a solution for ATM and IP networks, but those attempts are fundamentally flawed for reasons that will be described herein after.

It is also desirable that such a system allow optimisation in view of the conflicting requirements of Users and Network Service Providers in a dynamic way. This is particularly important for communication links with limited bandwidth, such as wireless communications. Again, no such system is available.

A telecommunication network may be described as a physically distributed collection of nodes interconnected by links. Examples of end-nodes are User Interfaces such as telephones or personal computers which produce and consume data. Intermediate nodes such as switches, routers or gateways generally transfer data from an incoming link to an outgoing link, while some may process or store data to offer services such as conferencing or voicemail.

Voice and computer data were once carried on separate networks, although both are now generally transmitted digitally. Because the requirements for voice and data transmission are so different, it is difficult to optimize the provision of both on a common network. Voice communication, for example, produces a steady stream of data at a fairly low rate, and rapid delivery is more important than accuracy. In contrast, data applications such as Web browsing generally produce bursts of data that are to be delivered accurately, and for which a delay of a second or two may be considered acceptable.

Other services may have different requirements for accuracy, delay and data rate, which characterise the Quality of Service (QoS) in a communication session. Ideally, a telecommunication Service Provider should provide a service which optimises communication for a User's particular application and simultaneously optimises the provision of that service over his own network along with services he is providing to other Users. Using traditional techniques, this would require the Service Provider to offer a different Quality of Service for each new application of data communications that is developed. No telecommunication system is currently available that accommodates such optimisation in view of the differing QoS requirements of various Users and applications.

It is desirable to provide a single telecommunications network which carries both data and voice on a common physical channel. This reduces costs by sharing resources. It follows that new applications must be able to use these integrated networks so that they can be developed without the overhead of creating special telecommunications networks for them.

It is also desirable that the process of developing new applications be as open as possible, rather than restricted to a small group of developers with specialized knowledge or who can be trusted to allocate resources according to policy, so that new applications can emerge quickly.

Because Service Providers have limited knowledge of what applications their Users may be implementing, it is difficult for them to offer products which are tailored to those applications. It is also clearly impossible for Service Providers to anticipate the requirements of applications that have yet to be developed. Similarly, Service Providers are not generally aware of the computing power that a given User has, in terms of processing speed, memory capacity, software and operator expertise. Therefore, Service Providers generally provide products that serve the most common market, and possibly one or two major niche markets. Currently, Users must search for the Service Provider that offers products best suited to their needs, if one does exist. Users that have multiple needs may have to enlist the services of a number of Service Providers.

A conventional telephony network provides a fixed quality of voice service, called toll quality, at a pre-arranged price. Long-distance re-sellers may use digital voice compression to offer lower-cost long distance service at a reduced price, but again, this service offers a fixed quality at a pre-arranged price. Because competitors offer different voice quality, pricing and probability of call success, End Users can choose to pay for quality by selecting a more expensive Service Provider with a good reputation. This method becomes cumbersome when new services appear and the end user must select a Service Provider for each of his applications and track their reputations by word of mouth.

When there is contention for network resources, the conventional telephone systems generally take a "first-come-first-served" approach and deny services to callers if sufficient resources are not available. This process is known as call admission. Clearly, there may be instances where a User would rather accept a lower quality communication than be denied access. The current telecommunications networks can not provide such an option.

The Internet has traditionally offered "best effort" service without making any attempt to prioritize traffic. However, because each Service Provider may make different choices about its network capacity and connections to other Service Providers, End Users may have some freedom to trade off quality for cost indirectly by choosing to subscribe through a variety of Service Providers. However, this is not a flexible or rigorous solution.

Packet switching systems such as the Internet, can assign different priorities to different packets so that high-priority packets take precedence over low-priority ones when there is a conflict. The difficulty is to assign the priorities correctly in a large system with many competing demands.

Packet priorities are not usually implemented to give a simple precedence because high-volume traffic flows at high priorities will completely shut out even low volumes of data at lower priorities. Fairness criteria are therefore used to define the effects of priorities, with a particular algorithm called weight fair queuing implemented in Internet routers. It rotates access to network links among the priority queues with the effect that lightly-populated priority queues get preferential but not exclusive access. However, this approach still does not define how to set packet priorities.

Recent extensions of the Internet protocol allow users to specify, by setting certain bits in their packet headers, that their data is to be routed to minimize cost or to minimize delay. These mechanisms are rarely used, however, because no mechanism is specified to ensure that they are used sparingly. Users are given no reason to demand anything but least cost and least delay in every case, so that the request becomes meaningless. The mechanism is also very coarse, allowing Users only two levels of concern about cost, and including no mechanism by which the User can state the rate at which he expects to produce data.

The ATM standard provides more detailed mechanisms to express Quality of Service parameters. It allows average and maximum delays to be specified and reported, and allows maximum and minimum data rates to be specified. These mechanisms are also rarely used, because again Users are given no reason to moderate their demands. ATM Quality of Service mechanisms are therefore adapted to closed telecommunications systems in which parameters that affect User traffic are set by the Service Provider.

Policy-based routing is a system that allows the network administrator to define priorities based on variables such as the source and destination, or protocol being used. For example, web browser traffic using hypertext traffic protocol (http), could be assigned a higher priority than email traffic using standard mail transfer protocol (smtp).

Often, Internet communications result in a packet passing through several different networks. Generally, each network will be administered by a different entity, with different and uncoordinated policies. Therefore, each of the Internet strategies described above does not offer a practical solution, as packets will inevitably pass through bottlenecks created by these uncoordinated policies.

Even if these policies were to be coordinated, or the transmission was to be made through a single Service Provider, the User still has no way of negotiating the treatment that his data is to receive within the network.

The existing systems do not allow provision of diverse services with specific performance requirements. For example, remote surgery in which a physician uses a remote manipulator to perform surgery, could not be implemented with existing systems. This application would require very strict demands on both accuracy and timeliness together with a high bandwidth for video. The consequences of the network failing to perform as required would be very serious.

Another example is Internet gaming, in which a number of players exchange small packets of information to update each other on their moves. Given how such games are typically implemented, this application calls for low latencies, but bandwidth requirements are light and a fairly high rate of packet loss can be tolerated; such game applications are generally designed to tolerate these packet losses.

It is also clear that the remote surgery application should take priority over Internet gaming when there is contention. Therefore, there is a need for a systematic way of making these decisions for the interaction among a wide variety of applications.

There is therefore a need for flexible system for resolving contention for telecommunications network resources that provides an improvement on the problems outlined above.

### Summary of the Invention

It is therefore an object of the invention to provide a method and system for negotiating telecommunication resources.

One aspect of the invention is broadly defined as a telecommunications system comprising: a First User Interface; a Second User Interface; a telecommunications network interconnecting the First User Interface with the Second User Interface and having at least one transmission means and protocol; the First User Interface having a First User Agent, representing the interests of the First User Interface in negotiating communication between the First User Interface and the Second User Interface; the telecommunications network being administered by a Network Agent, representing the interests of the telecommunications network in negotiating communication between the First User Interface and the Second User Interface; and a Negotiation Manager being operable to: identify participants in a negotiation; implement a negotiation discipline which allows each participant to consider a contract and either accept or revise the contract; and respond to the negotiation being successful by executing the contract.

In another embodiment of the invention there is provided a method of establishing communication between a First User and a Second User, said First User and said Second User being interconnected by a telecommunications network having at least one transmission means and protocol, comprising the steps executed by a Negotiation Manager of: identifying participants in a negotiation; implementing a negotiation discipline which allows each said participant to consider a contract and either accept or revise said contract; and responding to said negotiation being successful by executing said contract.

In another embodiment of the invention there is provided a method of establishing communication between a First User and a Second User, said First User and said Second User being interconnected by a telecommunications network having at least one transmission means and protocol, said at least one transmission means and protocol being administered by a Network Entity, said method comprising the steps executed by said Network Entity of: receiving a contract from a Negotiation Manager; inspecting said contract; responding to said contract not being acceptable by modifying said contract to an acceptable state; and returning said contract to said Manager.

In a further embodiment of the invention there is provided a method of establishing communication between a First User and a Second User, said First User and said Second User being interconnected by a telecommunications network having at least one transmission means and protocol, comprising the steps executed by said First User of: receiving a contract from a Negotiation Manager; inspecting said contract; responding to said contract not being acceptable by modifying said contract to an acceptable state; and returning said contract to said Negotiation Manager.

In accordance with a first aspect of the invention, there is provided a telecommunication system comprising:
a first user interface and a second user interface interconnected by a telecommunications network;
said first user interface being connected to means for executing a first set of programming code that determines said first user interface's requirements for communicating with said second user interface);
said telecommunication network being connected to means for executing a second set of programming code that determines available network resources of said network; the system comprising means for determining terms of communication
said telecommunication network being connected to means for executing a second set of programming code that determines available network resources of said network; the system comprising means for determining terms of communication between said first user interface and said second user interface through said network;
characterised in that said means for executing said first and second sets of programming code comprises at least one computer processor and electronic memory means, said at least one computer processor and electronic memory means being operable to execute a third set of programming code that manages negotiations between said first set of programming code and said second set of programming code, said negotiations being for determining said terms of communication between said first user interface and said second user interface through said network and being based on a trusted negotiating discipline.

In a particular implementation of the first aspect, the trusted negotiating discipline is selectable by a user of the first user interface from a plurality of negotiating disciplines.

In a particular implementation of the first aspect, the requirements include the available hardware resources of the first user interface.

In a particular implementation of the first aspect, the requirements include the network resources needed by an application executing on the first user interface.

In a particular implementation of the first aspect, the application is voice telephony.

In a particular implementation of the first aspect, the requirements include the costs that are to be assessed to the first user interface during the communication.

In a particular implementation of the first aspect, the available network resources include presently available network resources.

In a particular implementation of the first aspect, the available network resources include a cost of the network resources to be consumed during the communication.

In a particular implementation of the first aspect, the available network resources include a prediction of network usage during the communication.

In a particular implementation of the first aspect, the first set of programming code is implemented using a software agent that is programmed with instructions that represent the interests of the first user interface.

In a particular implementation of the first aspect, the third set of programming code is implemented as a negotiation manager software agent.

In a particular implementation of the first aspect, the second set programming code is implemented as a single network software agent.

In a particular implementation of the first aspect, the second set of programming code is implemented as multiple network software agents, each network software agent being respective to a different telecommunication service provider.

In a particular implementation of the first aspect, the second user interface is connected to a computer processor and an electronic memory means for executing a fourth set of programming code, preferably implemented as a software agent, that determines the second user interface's requirements for communicating with the first user interface. In this particular implementation, the third set of programming code is for further managing the negotiations so as to include the fourth set of programming code therewith. The requirements can include the available hardware resources of the second user interface. Alternatively, or in addition, the requirements include the network resources needed by an application executing on the second user interface. Alternatively, or in addition, the requirements include the costs that are to be assessed to the second user interface during the communication. The application can be, for example, voice telephony.

In a particular implementation of the first aspect, the network is an ATM network.

In a particular implementation of the first aspect, the trusted negotiating discipline includes at least one of a round robin, bid-and-ask, bluffing, poker and a reverse auction.

In a particular implementation of the first aspect, the negotiating discipline terminates the negotiation if the negotiations fail to reach an agreement within a predetermined period of time.

In accordance with a second aspect of the invention, there is provided a computer-implemented method for negotiating terms of communication between a first user interface and a second user interface connected by a telecommunications network, said method comprising the steps of:
receiving, from a first set of programming code associated with said first user interface, an offer for said terms of communication, said first user interface's offer including said first user interface's requirements for communicating with said second user interface through said network;
presenting said first user interface's offer to a second set of programming code associated with said network;
receiving, from said second set of programming code, another offer for said terms of communication, said another offer including at least said network's available resources **for** said communication and including a modification of said first user interface's offer;
characterised by the step of:
verifying said first user interface's offer conforms with a trusted negotiation discipline; wherein said step of presenting said first user interface's offer to said second set of programming code is only carried out if said first user interface's offer confirmer with aid discipline; and the further steps of:
returning said another offer to said first set of programming code if said another offer conforms with said discipline;
repeating the foregoing steps if said offers conform with said discipline; and,
terminating said negotiating if any one of said offers and counteroffers fail to converge according to said negotiation discipline.

In a particular implementation of the second aspect, the trusted negotiating discipline is selectable by a user of the first user interface from a plurality of negotiating disciplines.

In particular implementation of the second aspect, the requirements include the available hardware resources of the first user interface.

In accordance with another aspect of the present invention, there is provided a user-interface as claimed in claim 1.

In accordance with another aspect of the present invention, there is provided a telecommunication network as claimed in claim 5.

In accordance with another aspect of the present invention, there is provided a computer-implemented method for negotiating terms of communication between a first user interface and a second user interface connected by a telecommunications netowrk, the method being as claimed in claim 12.

Optional and preferred features of the aspects of the invention defined in claims 1, 5, 8 and 12 are set out in claims 2-4, 6, 7, 9-11 and 13.

### Brief Description of the Drawings

These and other features of the invention will become more apparent from the following description in which reference is made to the appended drawings in which:
**Figure 1** presents a physical layout of a telecommunications system in a manner of the invention;
**Figure 2** presents a schematic diagram of the software layer of a telecommunications system in a manner of the invention;
**Figure 3** presents a flow chart of a method for implementing a Negotiation Manager for negotiating communication between a First User and a Second User in a manner of the invention;
**Figure 4** presents a flow chart of a method for implementing a Telecommunication Network's Agent for negotiating communication between a First User and a Second User in a manner of the invention;
**Figure 5** presents a flow chart of a method for implementing a First User's Agent for negotiating communication between a First User and a Second User in a manner of the invention;
**Figure 6** presents a flow chart of a preferred method for implementing a Negotiation Manager for negotiating communication between a First User and a Second User in a manner of the invention;
**Figure 7** presents a flow chart of a preferred negotiating discipline for establishing terms of communication between a First User and a Second User in a manner of the invention;
**Figure 8** presents a flow chart of a preferred method for implementing a Telecommunication Network's Agent for negotiating terms of communication between a First User and a Second User in a manner of the invention; and
**Figure 9** presents a flow chart of a preferred method for implementing a First User's Agent for negotiating terms of communication between a First User and a Second User in a manner of the invention.

### Detailed Description of Preferred Embodiments of the Invention

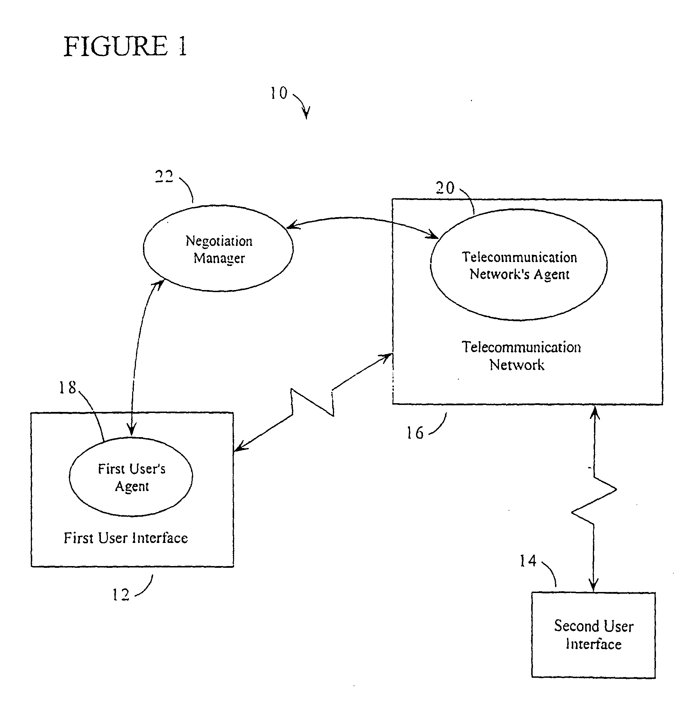

A system which addresses the objects outlined above, is presented as a block diagram in **Figure 1.** Physically, this telecommunication system **10** consists of a First User Interface **12** and a Second User Interface **14,** interconnected by a telecommunications network **16.** The First User Interface **12** and Second User Interface **14** may be, for example, telephones, cellular telephones, personal digital assistants, personal computers or servers which produce and consume data. -The telecommunications network **16** has at least one transmission means and protocol, which will be described in detail hereinafter.

At the software layer, the First User Interface **12** will have a First User Agent **18** which represents the interests of the First User Interface **12** in negotiating a communication between itself and the Second User Interface **14.** Similarly, the telecommunications network **16** has a telecommunications network agent **20** which represents the interests of the telecommunications network **16** in negotiating the communication.

The negotiation of the terms of communication may be administered by a software agent called the Negotiation Manager **22.** Physically, the Negotiation Manager **22** may reside anywhere in the system **10**, though in a simple implementation, it will reside somewhere in the telecommunications network **16** provided by the First User's Service Provider.

The Negotiation Manager **22** is operable to:
1. identify participating agents in a negotiation;
2. implement a negotiation discipline which allows each participating agent to consider a contract and either accept or revise the contract; and
3. respond to the negotiation being successful by executing the contract.

Broadly speaking, this system **10** provides a flexible telecommunications system for resolving contention for network resources.

The system **10** is flexible in that new services and features developed by outside parties may be implemented in the negotiation. In current telecommunication systems, all services are provided and controlled by the telecommunication system providers, which limits the services available and impedes the provision of new services. In this system **10,** an End User, Negotiation Manager or other Network Entity with an interest in the negotiation, may obtain new negotiating disciplines or software agents developed by themselves or outside parties and implement them in the negotiation. Details of such options will be described in greater detail herein after.

The system **10** of the invention may also be generalised to permit multiple parties to negotiate the terms of a given communication. The requirement for this functionality is clear, as a communication may have to pass through two, three or more telecommunication providers in traversing a broad geographical area. It is in the best interest of all the Network Entities involved in the communication to also participate in the negotiation.

This generalisation also allows communications which have multiple End Users, such as conference calls, to be negotiated with all of the End Users and their associated Service Providers participating.

The system **10** of the invention encourages Service Providers to offer a greater variety and flexibility in their services, by improving the efficiency of their networks accordingly. In turn, this increased variety and flexibility allows the User to negotiate the services that he wants, rather than being forced to choose between limited services from the Service Provider to which he subscribes, or having to seek out a new Service Provider that offers the services he requires.

This system **10** resolves of contention between Users by making a variety of data and voice telecommunication services available that are suited to varying applications, and providing incentives, such as reduced prices, to use available resources rather than insisting on the highest quality. By making the provision of those services open to real time negotiation, the participants are able to reach a mutually agreeable result.

As described above, the invention allows these improvements by providing a system wherein each interested party has a software agent which negotiates on his behalf. As a minor issue, this requires that a convention for negotiation be established that all the software agents can understand, though the nature and parameters of such a convention does not limit the invention.

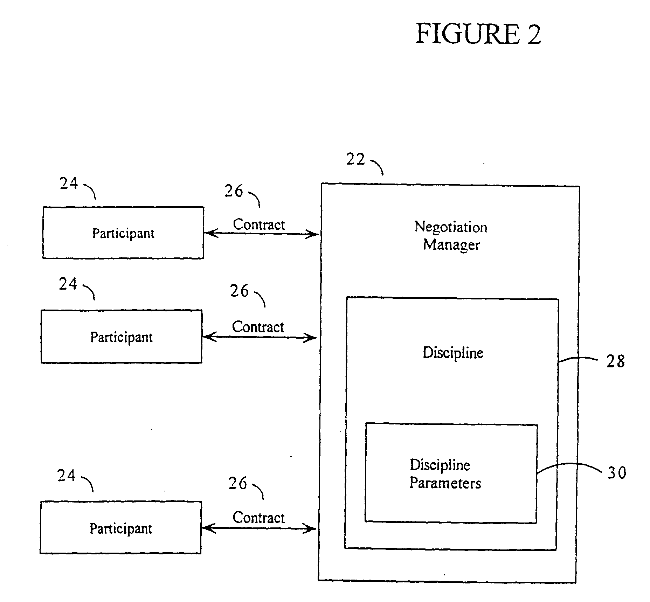

A generalization of the software layer of the invention is presented in **Figure 2.** This Figure identifies each interested party in the negotiation as a participant **24.** In a simple implementation as described with respect to **Figure 1** above, the participants **24** would include the First User's Agent **18** and the Telecommunication Network's Agent **20.** This example is consistent with the traditional model of a voice telecommunication where the originating caller assumes the cost of the service.

However, having an Agent representing the Second User involved in the negotiation would allow the Second User to assume all or part of the cost of the telecommunication. More importantly, it would allow the communication to be negotiated with consideration for the interests of the Second User Interface **14.** The Second User Interface **14,** for example, may not have the modem speed of the First User Interface **12,** so there may not be any benefit to negotiating a high-speed connection between the First User Interface **12** and the Telecommunication Network **16.**

Similarly, if the Telecommunication Network **16** consists of a number of ATM, long distance or frame relay providers, it may be advantageous to include a software agent for each respective telecommunication provider in the negotiation as well. Therefore, any network entity in the telecommunication system **10** which has an interest in the outcome of the negotiation, may be a participant **24** in the negotiation.

The Participants **24** communicate with the Negotiation Manager **22** by passing a Contract **26** back and forth using standard default communications protocols. In general, a negotiation will consist of a single Contract **26** that each participant **24** is free to inspect and modify, while in use of some disciplines, the Contract **26** may also contain parts of the communication content. Use of a single Contract **26** avoids problems usually experienced with multiple contracts that require additional overheads of coordination and time stamping.

As well, because the Contract **26** is a relatively small data packet, little real time is lost in transferring it from one participant **24** to another. The User may also have some control over the Contract's **26** size by his choice of negotiating strategy and parameters. The contents of this Contract **26** will be detailed herein below.

The Negotiation Manager **22** will employ a negotiation discipline **28** according to a set of discipline parameters **30.** The invention will be described herein below with respect to a specific example of a negotiation discipline **28,** but the invention is independent of the actual negotiation discipline **28** employed.

As noted above, the invention is not limited by the physical location of the Negotiation Manager **22.** In general, it is desirable that the Negotiation Manager **22** be "trusted" by all parties, or reside in a secure location, but even this is not necessary if participants **24** secure themselves within their negotiating preferences. For example, a participant **24** could restrain his contract **26** proposals to be revocable, allowing himself a last-look prior to commencing execution of a negotiated contract **26.** Other methods of securing, for example, by use of cryptographic signatures or an authentication list, are known in the art.

Because the location of the Negotiation Manager **22** is not restricted, it could be provided by a network Service Provider, the User himself, or a third party. This flexibility is one of the benefits of the invention, in that it makes this an open system. A third party can create a Negotiation Manager **22** or a negotiation discipline **28** and make it available to all Users and Network Entities on the telecommunication system **10.**

This openness will allow the system **10** of the invention to mature very quickly by the addition of new Negotiation Managers **22** and negotiating disciplines **28** with new features. Traditional telecommunication systems which were limited to a single Service Provider would only offer the services that the single provider made available.

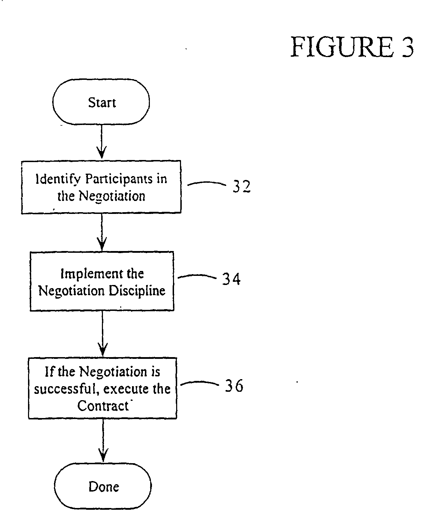

A simple flow chart of the Negotiation Manager **22** operation is presented in **Figure 3.** The Negotiation Manager **22** identifies the participants **24** in the negotiation at step **32,** implements the negotiation discipline **28** at step **34,** and if the negotiation is successful, executes the terms of the contract **26** that have been negotiated at step **36.**

The identification of the participants **24** at step **32** may be made in a number of manners. In a simple implementation with two participants **24,** namely the First User's Agent **18** and the Telecommunication Network's Agent **20,** the participants **24** will be identified in the initial contract **26** created by the First User's Agent **18** when he initiates his request for communication with the Second User Interface **14.** In such a case, the initial contract **26** will identify the First User Interface **12** as the source of the contract **26** and the calling party, the Second User Interface **14** as the called party, and the Telecommunication Network **16** as the Service Provider.

In the more general case, the initial contract **26** will still identify the First User Interface **12** as the source of the contract **26** and the calling party, and the Second User Interface **14** as the called party, but the identification of participants **24** at the Telecommunication Network **16** level may be left to the Negotiation Manager **22.** Having Negotiation Managers **22** identify Service Providers from a database will give the Service Providers motivation to actively seek out Negotiation Managers **22,** because if a Service Provider is not on a Negotiation Manager's **22** database, he will not be advised of any negotiations by that Negotiation Manager **22.** Methods for creating, accessing and maintaining such a database of Service Providers are well known in the art.

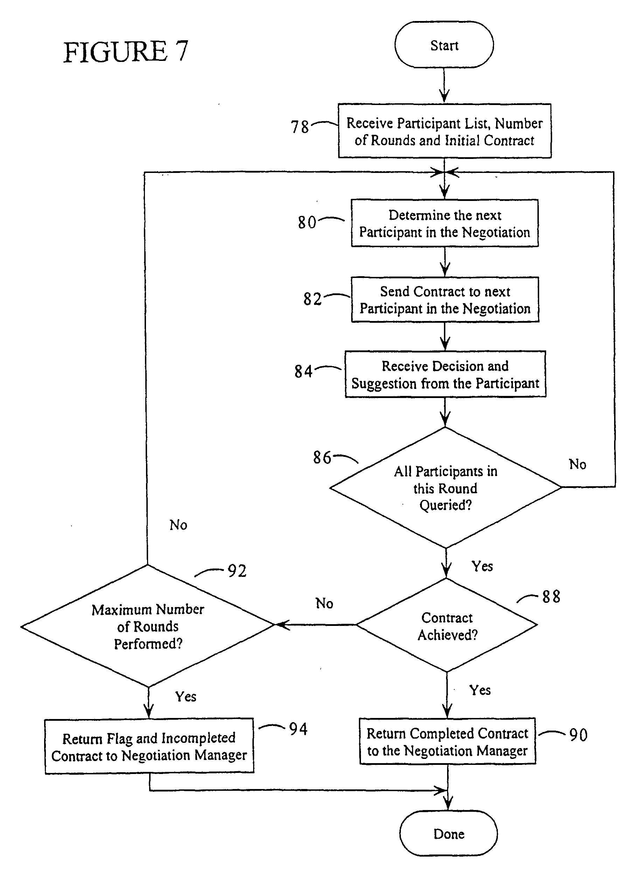

Implementation of the negotiation discipline **28** at step **34** will be described in greater detail with respect to the example of the round-robin discipline in **Figure 7.** For the sake of **Figure 3,** it is sufficient that the negotiation discipline **28** consist of a strategy which allows a contract **26** to be negotiated that is satisfactory to each participant **24.** In the simple case of **Figure 1,** the negotiation discipline **28** may consist of the Negotiation Manager **22** transferring the contract **26** back and forth between the First User's Agent **18** and the Telecommunication Network's Agent **20** without any interference by the Negotiation Manager **22.** In such a case, the First User's Agent **18** may time out if a successful contract **26** is not negotiated within a specific time period, in order to halt the negotiation.

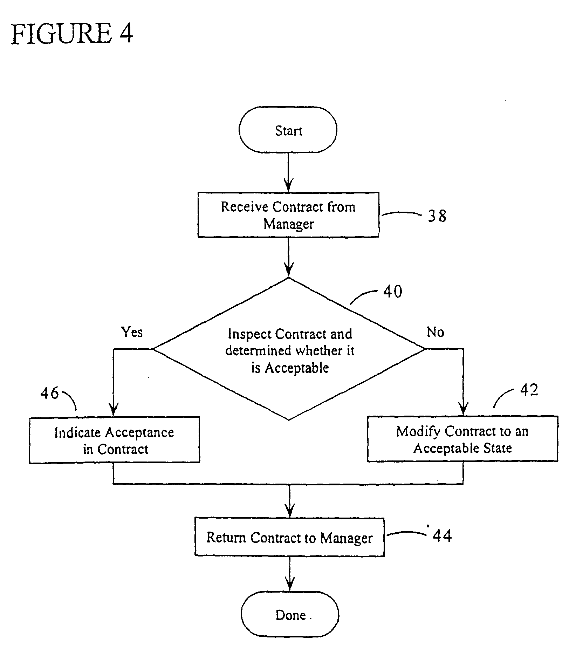

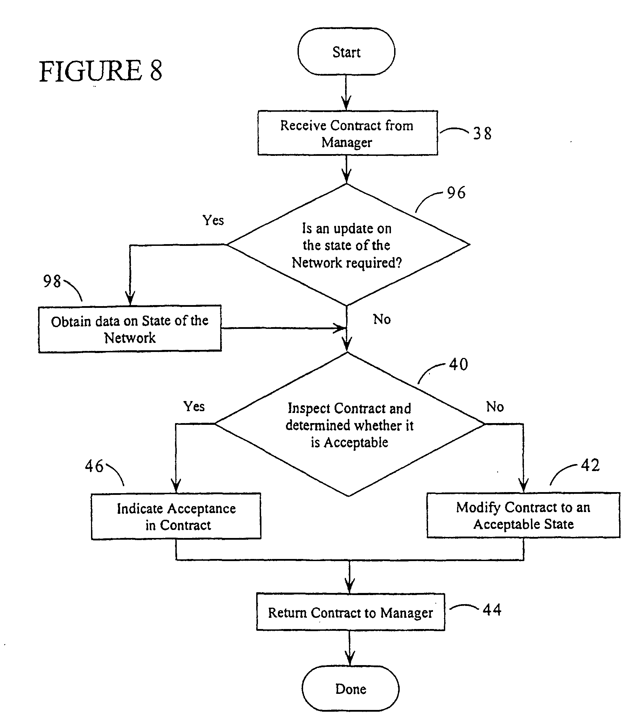

If the initial contract **26** prepared by the First User's Agent **18** is acceptable to the Telecommunication Network's Agent **20,** then the Telecommunication Network Agent **20** may approve the contract **26** and return it to Negotiation Manager **22** unmodified. Details on how the Telecommunication Network's Agent **20** analyses the contract **26** and responds will be described with respect to **Figures 4** and **8** herein below.

At step **36,** the Negotiation Manager **22** determines whether the contract **26** has been successfully negotiated, and if so, allows the contract **26** to execute. The successful negotiation of the contract **26** may be indicated by setting a flag or bit in the contract **26.**

**Figure 4** describes the broad operation of Telecommunication Network's Agent **20** in the form of a flow chart. As indicated above, the purpose of the Telecommunication Network's Agent **20** is to represent the interests of the Telecommunication Network **16** in negotiating a communication between the First User Interface **12** and the Second User Interface **14.** As the Telecommunication Network **16** has at least one telecommunication means and protocol at its disposal, it may want to negotiate to optimise efficient use of its resources.

Operation of the Telecommunication Network's Agent **20** is straightforward. At step **38,** the Telecommunication Network's Agent **20** receives the contract **26** from the Negotiation Manager **22.** On the first iteration of a simple implementation as described with respect to **Figure 1** above, this contract **26** will contain the information supplied by the First User's Agent **18** and described above. The Telecommunication Network's Agent **20** inspects the contents of this contract **26** at step **40,** and determines whether it is acceptable or not.

If the terms of the contract **26** are not acceptable, the Telecommunication Network's Agent **20** modifies the terms of the contract **26** to terms it would find acceptable, and returns the contract **26** to the Negotiation Manager **22** at step **44.** In a simple case where the Telecommunication Network **16** has a very limited set of resources, the Telecommunication Network's Agent **20** may comprise a simple algorithm which generates new contract **26** terms by referring to a database of resources and standard rates.

In a more sophisticated implementation, the Telecommunication Network's Agent **20** may comprise a rules-based agent that optimises use of a continuum of resources. For example, if the Telecommunication Network **16** has access to ATM services, it may offer Constant Bit Rate (CBR) transmission on a complete continuum from 10 Kb/s to 10 Mb/s, with a rate corresponding linearly to the traffic level. In such an arrangement, the Telecommunication Network's Agent **20** would have to consider its current traffic capacity, load, expected traffic and cost, in determining a counter offer that optimizes use of its resources. The implementation of such resource management methods would be within the ability of one skilled in the art.

If the terms of the contract **26** are determined to be acceptable at step **40,** then the Telecommunication Network's Agent **20** indicates its acceptance in the contract **26** at step **46** and returns it to the Negotiation Manager **22** at step **44.** As noted above, the indication that the contract **26** is acceptable may be done in a number of manners, including setting a flag or bit in the contract **26.**

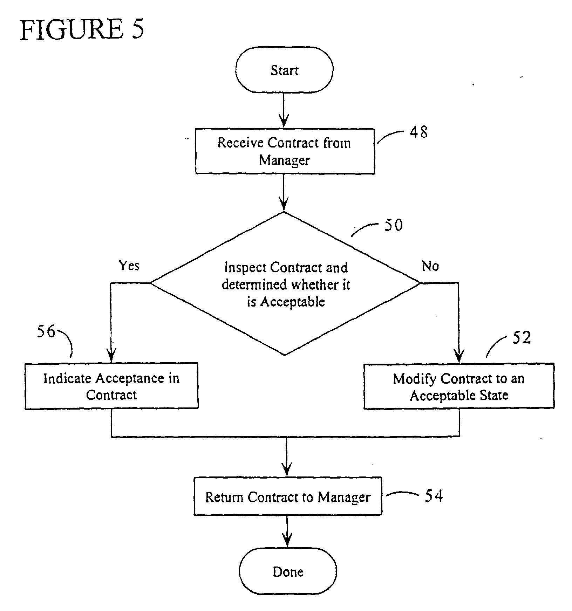

**Figure 5** describes the broad operation of First User's Agent **20** in the form of a flow chart. This flow chart describes a software agent with the functionality to receive only, but it would be expected that implementations would exist which require either originating communications only, or both receiving and originating.

In broad terms, the First User's Agent **18** operates in a very similar manner to that of the Telecommunication Network's Agent **20.** As noted above, the purpose of the First User's Agent **18** is to represent the interests of the First User Interface **12** in negotiating a communication between the First User Interface **12** and the Second User Interface **14.** As the computational and communication resources and constraints of the First User Interface **12** may only be known to itself, it may want to negotiate a communication means and protocol that makes best use of its resources in view of the application that it is implementing. For example, these resources and constraints may include processing speed, memory capacity and modem speed.

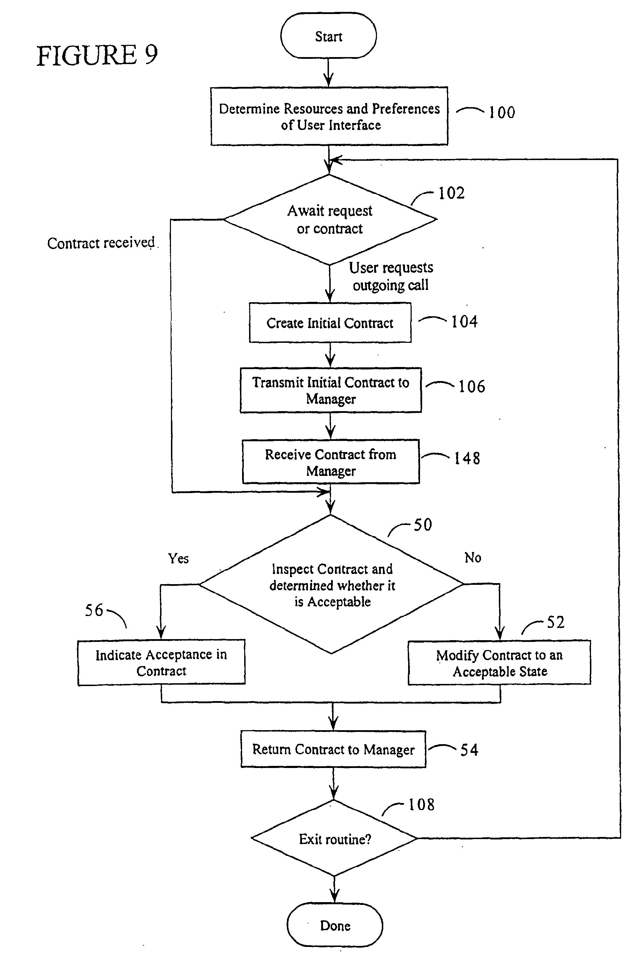

Operation of First User's Agent **18** commences at step **48** when the First User's Agent **18** receives the contract **26** from the Negotiation Manager **22.** In the broad implementation, the First User's Agent **18** may not have the functionality to initiate a communication negotiation. However, such functionality will be described with respect to the preferred embodiment of the invention with respect to **Figure 9.** In the case of the First User's Agent **18** not having the functionality to generate a initial contract **26,** the initial contract **26** may be generated by another party attempting to contact the First User Interface **12,** or may be generated as a standing order by the Telecommunication Network's Agent **20** when the First User Interface **12** logs on to the Telecommunication Service provided by the Telecommunication Network **16.** Other similar circumstances would be clear to one skilled in the art.

The First User's Agent **18** inspects the contents of this contract **26** at step **50,** and determines whether it is acceptable or not. If the terms of the contract **26** are not acceptable, the First User's Agent **18** modifies the terms of the contract **26** to terms it would find acceptable at step **52,** and returns the contract **26** to the Negotiation Manager **22** at step **54.** In a simple case the First User's Agent **18** may have a predefined set of limits that the First User Interface **12** does not wish to exceed. For example, this may include: not accepting charges for any incoming calls, not exceeding the transmission rate of First User Interface's **12** modem, or not accepting voice communication with less than toll quality. If the parameter of an incoming contract **26** exceeds any of these limitations, they may be identified with a simple logic test, and a new contract **26** generated which changes these parameters so that they fall within the desired bounds. The First User's Agent **18** may comprise a simple algorithm which refers to a database of resources and preferences.

In a more sophisticated implementation, the First User's Agent **18** may comprise a rules-based software agent that optimises use of a continuum of resources, in the same manner as the Telecommunication Network's Agent **20** described above. The First User's Agent **18** may, for example, negotiate the communication with consideration for the particular application, and the computation and communication parameters of the First User Interface **12.** These preferences may correspond to end-to-end telecommunication parameters such as peak cell rate (PCR), tolerable cell delay variation (CVDT), cell transfer delay (CTD), cell loss ratio (CLR) and peak-to-peak delay variation (CDV). Such parameters are generally used in ATM to specify the quality of service (QoS) that a telecommunication service provides. Clearly, the invention may be applied with various ones of these parameters, or different parameters known in the art, such as mean opinion score (MOS). Other subject measures are also possible with mappings.

If the terms of the contract **26** are determined to be acceptable at step **50,** then the First User's Agent **18** may indicates its acceptance in the contract **26** at step 56 and return it to the Negotiation Manager **22** at step **54.** As noted above, the indication that the contract **26** is acceptable, may be done in a number of manners, including setting a flag or bit in the contract **26.**

The implementation of the invention in the preferred embodiment will now be described.

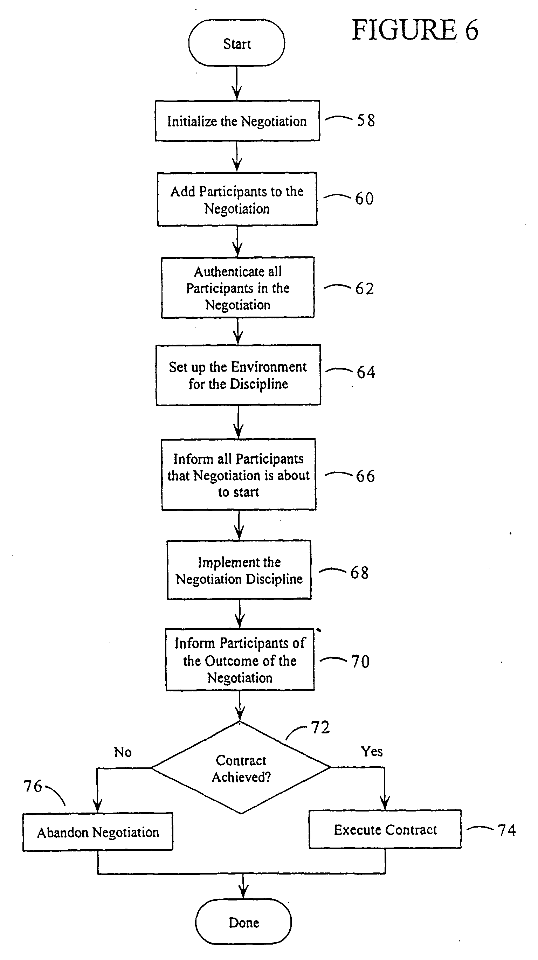

**Figure 6** outlines the preferred operation of the Negotiation Manager **22** in response to a communication request from a User. At step **58,** the Negotiation Manager **22** is initialized. It is known in the art of computer software programming to initialize variables, arrays and functions at the beginning of a program. At step **60,** the participants **24** in the negotiation are identified. If the negotiation has been initiated by a First User, then the initial contract **26** that the Negotiation Manager **22** receives will have both the First User Interface **12** and Second User Interface **14** identified, and the Negotiation Manager **22** will have to identify the entities of the Telecommunication Network **16** that it wishes to add as participants **24** in the negotiation in order to complete the communication.

The Negotiation Manager **22** then authenticates the participants **24** at step **62.** As noted above, the Negotiation Manager **22** is a software agent that may exist anywhere in the network. Therefore, it will not necessarily have secure relationships with all of the participants **24** in a negotiation. In the preferred embodiment the participants **24** will be authenticated by some means such as the use of cryptographic signatures as known in the art.

Once the participants **24** have been authenticated, the Negotiation Manager **22** may set up the environment for the discipline **28** at step **64.**

The participants **24** are then informed that the negotiation is about to start at step **66.** This step provides participants **24** with feedback as to the state of the negotiation, but also may be used to caution participants **24** that subsequent proposals may be non-revocable. That is, once a user has made an offer, he is not able to withdraw his offer. Preferably, the non-revocability will time out after a short period of time, such as a minute.

The negotiation discipline **28** is then implemented at step **68.** Greater details as to the operation of the negotiation discipline **28** are provided hereinafter with respect to **Figure 7.**

The participants **24** are then advised whether the negotiation was successful or failed, at step **70.** If the negotiation is identified as being successful at step **72,** then the contract **26** is executed at step **74.** If not, the contract **26** is abandoned at step **76.**

An example of a negotiation discipline **28** per step **68** of **Figure 6** is presented in **Figure 7.** This negotiation discipline **28** is described as a "round robin" discipline, in that each participant **24** successively, has the opportunity to review a contract **26** and either accept to revise it. This process is repeated for a finite number of rounds. Once all participants **24** have accepted the contract **26,** it is executed.

The contract **26** will pass through the hands of each participant **24** once per round, with the number of rounds predetermined. If a mutually acceptable contract **26** is not negotiated within the predetermined number of rounds, the negotiation fails.

The round robin negotiation begins at step **78** where the Negotiation Manager **22** receives the participant **24** list and number of rounds generated internally, and the initial contract **26** created by the First User's Agent **18.** In the open concept of the invention, it is not necessary for the negotiation discipline **28** routine to reside in the Negotiation Manager **22** itself. This would allow any entity of the negotiation to provide a negotiating discipline **28,** or even to request a negotiating discipline **28** provided by a third party.

The next participant **24** in the negotiation is identified at step **80,** and the contract **26** is transmitted to the next participant **24** at step **82.** This participant **24** will process the contract **26** in a manner that will be described with respect to **Figures 6** through **9,** and return the contract **26** to the Negotiation Manager **22** at step **84.**

If the negotiation is not successful, it is determined whether all participants **24** have been queried in the given round at step **86.** If not, then control returns to step **80** so that the next participant **24** in the round may be identified and queried. As the contract **26** identifies each participant **24** in the negotiation, it is straightforward to tag or identify whether a participant **24** has reviewed the current contract **26,** and whether a participant **24** has accepted a given contract **26.** Such methods of identification would be known to one skilled in the art.

At step **88,** a determination is made whether a contract **26** has been successfully negotiated. As described above, the indication of acceptance would generally be made by each participant setting a bit or flag in the contract **26,** or by adding a cryptographic signature before returning the contract **26** to the Negotiation Manager **22.** This would require each of the participants **24** to have reviewed and approved of the current contract **26.**

Preferably, a contract **26** could be accepted that a participant **24** has not yet reviewed, provided that it is more favourable to that participant **24** than one which it has already irrevocably approved. For example, if the First User's Agent **18** has approved a contract **26** for 5 minutes at a constant bit rate of 10Kb/s for a cost of 5 cents per minute, which is to be irrevocable for a one minute period, and a contract **26** is subsequently negotiated for 5 minutes at a constant bit rate of 10 kb/s at a cost of 4 cents per minute, then the participant **24** would be considered to have already approved the more favourable contract **26,** provided it is negotiated within the one minute irrevocable period.

If the contract **26** has been successfully negotiated, the completed contract **26** is returned to the Negotiation Manager **22** at step **90** for execution.

If the contract **26** has not been successfully negotiated, then it is determined whether further rounds should be executed in attempting to negotiate a contract **26,** at step **92.** If further rounds are necessary, control returns to step **80.** If all of the predetermined rounds have been executed and a successful contract **26** had not been identified at step **88** then the negotiation is considered to have failed, and the incomplete contract **26** is retumed to the Negotiation Manager **22** at step **94,** along with a failure indication.

Operation of the preferred embodiment of the Telecommunication Network's Agent **20** and First User's Agent **18** will now be described with respect to **Figures 8** and **9,** respectively. Before describing the functionality of these agents, some preferred modes of implementation common to both agents, will be described.

Firstly, it is intended that Telecommunication Network's Agent **20** and First User's Agent **18** be implemented using software "agents" customized to their respective users, rather than generic software algorithms. Of course, the broad invention may be practised with generic software rather than agents, though with corresponding tradeoffs in functionality and flexibility.

Secondly, although described herein with respect to flow charts with successive steps, it is understood that the software agents will generally remain resident in the memory of a computer or telephony device, in an idle state. This will allow the agent to detect an incoming request for communication.

Thirdly, in the preferred embodiment, it is intended that the Telecommunication Network's Agent **20** and First User's Agent **18** be implemented using Java or C++ based programming languages. The advantages of using Java would be clear to one skilled in the art, such as the current widespread use, particularly with respect to web browsers and other Internet based applications, generally universal standards, and facility for "sandbox" security. Clearly, the invention is not limited by the use of such programming languages.

The "sandbox" approach to security is one in which an applet is only allowed to operate within certain bounds (the sandbox). This constrained runtime environment prevents applets from accessing and altering unauthorized areas, or performing otherwise harmful operations. In Java applications, a special class called the Applet Security Manager performs this enforcement. For example, the Security Manager may prevent applets from reading or writing files to the Client's hard disk or establishing network connections except to the server that the applet came from.

As noted above, **Figure 8** describes the operation of a Telecommunication Network's Agent **20** in a preferred embodiment of the invention. Steps **38, 40, 42, 44** and **46** would be implemented functionally in the same manner as those described with respect to the broad embodiment of **Figure 4** above.

In the preferred embodiment, the Telecommunication Network's Agent **20** monitors the state of the network resources available and predicts expected usage, so that it may make appropriate decisions required the acceptability of incoming contracts **26,** and the generation of outgoing contracts **26.**

In the preferred embodiment, the Telecommunication Network's Agent **20** determines at step **96** whether data on the state of the network is recent enough to allow correct decisions to be made, or whether the data should be updated. If the determination has been made that new data are required, the new data are obtained at step **89.**

The network data will comprise at least two types: internal and external. Internal data will consist generally of the current loading of closely held resources, such as central processor units (CPUs) and memory, and the known obligations to provide telecommunication services. These data are very easy to monitor as all access and management is under the control of the Service Provider. Generally, these data may be updated on a continuous or real time basis.

External data is more difficult to obtain and to predict, as it considers resources that are under the control of other Service Providers. Because administration of these services are beyond the reach of the Telecommunication Network's Agent **20,** it is necessary to query the availability and quality on a regular basis, such as on a periodic basis determined by time or traffic. For example, it could be required that the network data be updated every minute or more frequently, or with every tenth call.

In the preferred embodiment of the invention, the internal data may be monitored on a continuous basis by recording the current loading and future obligations. The external data is to be updated when a new call is received and a predetermined time period has expired.

Updating of the external data may be performed in a number of manners. For example, sample packets could be directed to pass through targeted telecommunication networks or entities, and the performance measured. In the preferred embodiment, requests will be transmitted to Service Providers requesting operational data to be returned. The onus will be on the Service Providers to forward data promptly, in order to remain as acceptable providers to the Telecommunication Network's Agent **20.**

As both the Telecommunication Network's Agent **20** and First User's Agent **18** may be operable to monitor the performance during a communication, Service Providers will be forced to be honest with their offers, or clients and other Service Providers will refuse to use their services.

In the preferred embodiment, the Telecommunication Network's Agent **20** will provide standard asynchronous transfer mode (ATM) services that have been chosen to describe the requirements of known applications:
1. Constant Bit Rate (CBR) is intended to model standard voice telephony but is wasteful of bandwidth. CBR is straightforward in definition, setting bandwidth with a given peak cell rate (PCR). The User also defines the tolerable cell delay variation (CVDT), which he expects to smooth out with buffering at the destination. Cell transfer delay (CTD), cell loss ratio (CLR) and peak-to-peak delay variation (CDV) are specified by the network as its quality of service (QoS). Users would expect to pay by the minute.
2. Real-time Variable Bit Rate (rt-VBR) allows bursts up to a peak cell rate and maximum burst size (MBS) and guarantees cell transfer delay (CTD) and its tolerable variation (CDVT) at a specified sustainable cell rate (SCR). This is a preferred mode for modern telephony. Users would probably still expect to pay by the second.
3. Non-real-time Variable Bit Rate (nrt-VBR) does not guarantee CTD, and is more appropriate for a web browser application. Users would likely expect to pay by the minute, but would probably want a discount for slow packets.
4. Unspecified Bit Rate (UBR) is basically best-effort and models the current Internet service. UBR actually does specify peak cell rate, but not a sustainable cell rate. Users might expect to pay by the megabyte.
5. Available Bit Rate (ABR) specifies a minimum cell rate (MCR) as well as the peak, and the network uses back-pressure to control the flow. The network sends "resource management" cells to the source to allow it to adapt to the capacity available. Users might expect to pay by the minute for the minimum cell-rate and to pay a slight premium when rates are high, or to pay for premium service but get a discount when forced back down to the minimum rate. This mechanism should be able to get the best utilization out of the network when users have sophisticated rate-adaptive coders, and may be optimal for video telephone.

As noted above, **Figure 9** describes the operation of a First User's Agent **18** in a preferred embodiment of the invention. Steps **48, 50, 52, 54** and **56** would be implemented functionally in the same manner as those described with respect to the broad embodiment of **Figure 5** above.

Although the First User's Agent **18** and the Telecommunication Network's Agent **20** are functionally similar with respect to the broad implementation, the focus is quite different in the preferred embodiment. The focus of the Telecommunication Network's Agent **20** is on the state and predictability of the Telecommunication Network's **16** resources, while the focus of the First User's Agent **18** is on the requirements of the First User Interface **12.** The First User's Agent **18** may identify the resources that the First User Interface **12** has available, and determine the requirements of the User in a real time environment, before it can negotiate effectively on behalf of the First User Interface **12.**

For applications such as telephony and websurfing, it is preferred that the First User's Agent **18** communicate with the User via a graphic user interface (GUI) in a windows environment. It is preferred that this GUI be presented to the User as a webpage which may be edited using a standard web browser. Techniques for developing such an interface with the functionality of the invention are well known in the art. Other applications, such as remote surgery, may have First User requirements embedded or "hardwired" into the First User's application program.

At step **100** of **Figure 9,** the First User's Agent **18** obtains information on the hardware resources and preferences of the First User Interface **12.** Information regarding the hardware resources may be collected manually, whereby the User inputs the relevant data in response to prompts from the First User's Agent **18,** but preferably is collected by the First User's Agent **18** from the operating system when the First User Interface **12** is powered up. This information would include data such as the speed of the microprocessor, memory capacity and access time, operating system environment, modem software and hardware. Methods of performing such tasks are well known in the art.

User preferences are generally input manually, preferably through a graphical user interface and stored on the local computer. As well, the User Agent software may be provided with default values for parameters such as latency and speed. Details on such preferences are given herein below.

The First User's Agent **18** then resides in an idle mode at step **102,** awaiting either a request to accept an incoming call, or a request from the local user to generate an outgoing request. If a request arrives to accept an incoming call, then control passes to step **50,** which executes as described above with respect to **Figure 5.**

If a request is received from the User or a User program to initiate negotiation of a new communication, control passes to step **104,** where the necessary data is collected to create an initial contract **26.** Typically, this initial contract **26** would be created by the First User's Agent **18** querying the User for the following information:
1. A destination, or called party, such as Second User interface **14** in **Figure 1**
2. An application, such as video conferencing, voice communication, web browsing or email.
   The First User's Agent **18** would have default parameters associated with most of these applications, as described briefly with respect to the ATM modes above, including minimum acceptable costs, latencies and speed. These defaults could be modified by the User, or new modes created. If a particular application is unknown to the First User Agent, then the User could be queried for default parameters with the First User Agent storing these parameters for future reference. For example, a User may wish to have more than one default mode for voice communication: toll quality for business use and low quality voice for personal or peak period use. A skilled technician would be capable of implementing software to perform such functions.
3. Manual or automatic confirmation of acceptance of a contract **26** negotiated by the First User's Agent **18.**
4. Coordination of costs. For example, costs may be assessed to the calling party, called party (reversing the charges, or toll free 1-800 telephony services), shared billing, or pay per use (such as 1-976 telephony services).
5. Preference not to allow non-revocable contracts **26.**
6. Preferences as to particular Service Providers to contact and negotiate with.
7. Preferences as to which Negotiation Manager **22** or negotiating discipline **28** is to be used and a URL address or location on a local disk where they may be found.

On the basis of the queried information, and in combination with the knowledge of the User Interface **12** collected at step **100,** the First User's Agent **18** creates an initial contract **26** at step **104,** which it transmits to the preferred Service Provider at step **106.** The First User's Agent **18** then awaits a contract **26** to be returned from the Negotiation Manager **20** at step **48.**

The balance of the routine executes in the same manner as that described with respect to **Figure 5** above until step **108** is reached. At step **108,** the user may exit the routine or return to step **102** to continue monitoring for either a request for a new communication to be initiated, or a new contract to be received.

The invention may be applied with a broad range of optional functionality, which would be clear to one skilled in the art from the teachings herein. One such option would be the flexibility to halt and re-negotiate terms during a communication. This would allow, for example, a Service Provider to make his fastest communication lines available for a reduced price on the condition that the lines can be revoked if a higher paying customer wishes to obtain the line. Agreeability to such interruptions would have to be approved of during the initial negotiation, but this would allow all participants an extra degree of flexibility that is not offered by existing systems.

Another option would be the handling of recursive negotiations by the software agents themselves rather than the Negotiation Manager **20.** Rather than allowing the Negotiation Manager **20** to distribute a contract **26** to Network Entities that it identifies, a First User's Agent **18** may wish to identify Local Network sub-Entities, such as other Service Providers, that it wishes to participate in the negotiation. This would allow the First User's Agent **18** to screen groups of participants from one another. Similarly, the Network Agent may have Network sub-Entities that it wishes to have participate in the negotiation, but which it wishes to screen from other parties in the negotiation. In both cases, the participant can receive the contract **26,** send it to the sub-participant and receive the sub-participants response. The participant may wish to modify the contract **26** by adding or removing information before sending it to the sub-participant, and modifying the sub-participant's response before sending it to the Negotiation Managers **20.**

In addition to the "round robin" negotiating discipline **28** described herein above, it is expected that a variety of other negotiating disciplines **28** would be made available by the Negotiation Managers **20** or third parties. These would include:
1. Bid and Ask - Each entity is allowed to make offers which others may accept at any time. A less structured discipline than the round robin discipline, as entities may introduce new bids at any time.
2. Bluffing - Only negotiating with regard to certain parameters and keeping others secret. This allows entities to bluff as to their requirements or resources in an attempt to negotiate better terms. For example, a Service Provider may not want to disclose that his resources are not being used, as a User might respond by holding out for a lower price.
3. Poker - A Service Provider may allow a number of Users to bid on services simultaneously and provide services to those Users who reach a certain level in the negotiation. For example, a Service Provider may have 10 identical communication units available and start negotiation with 20 Users bidding on various numbers of units. As the price rises, Users will drop out of the negotiation, and the Service Provider will settle once he has Users bidding on the 10 units or less. This negotiating discipline more would be useful in the sale of commodity services, such as the availability of a communication line for a predetermined time period, rather than on a per call basis.
4. Reverse Auction - A Service Provider may start a negotiation with multiple Users, at a high price and lower that price until a User accepts. This discipline would also be useful in the sale of commodity services.

While particular embodiments of the present invention have been shown and described, it is clear that changes and modifications may be made to such embodiments without departing from the true scope and spirit of the invention.

Although the detailed operation has been described with respect to method steps, clearly the invention may be embodied by a combination of software and hardware. The method steps may be executed by a computer processor or similar device suitably programmed, or may be executed by an electronic system which is provided with means for executing these steps. Similarly, an electronic memory means such as a computer diskette, CD-Rom. Random Access Memory (RAM) and Read Only Memory (ROM) may be programmed with coding to execute such method steps. As well, electronic signals representing these method steps may also be transmitted via a communication network.

The sets of executable machine code representative of the method steps of the invention may be stored in a variety of formats such as object code or source code. Such code is described generically herein as programming code, or a computer program for simplification. This executable code may also be transmitted as an electronic signal over communication links. As well, the executable machine code may be integrated with the code of other programs, implemented as subroutines, by external program calls or by other techniques as known in the art.

It is understood that as communication networks become more flexible and powerful, the tradition definitions of servers, routers, computers, telephones and other hardware components are becoming less and less clear. These terms have been used herein to simplify the discussion and do not strictly limit the invention to the former definitions of such hardware. For example, a cellular telephone with Internet access may implement the invention by being supplied with a software agent in read only memory. Such a telephone would clearly not have the traditional limitations associated with the term "telephone".

Similarly, existing telephony providers could modify their routing equipment to apply the invention in a broad range of manners, including adding on the new operability as stand-alone equipment, or modifying their existing equipment accordingly. In either situation, it would not be expected that the actual implementation would read literally on the method as outlined herein, but that one skilled in the art would be capable of implementing the invention is such applications from the description of the invention herein.

As well, the order and details of the method steps could easily be modified and still realize the benefits of the invention. Such modifications would be clear to one skilled in the art. The embodiments as presented herein are intended to be illustrative and not limiting.

## Claims

1. A user interface (12) comprising:
a user-input hardware resource for receiving an input of a communication from a user;
a user-output hardware resource for presenting an output of said communication to said user;
a computer processing hardware resource for executing a software application that processes said input from said user-input hardware resource and processes said output to said user-output hardware resource; and
a connection means for connecting said computer processing hardware resource to a second user interface (14) via network (16), said connecting means further for connecting to at least one computer processor and electronic memory means that is operable to execute a first set of programming code (18) for determining said user interface's (12) requirements for conducting said communication with said second user interface (14), said first set of programming code (18) further for negotiating terms of said communication with a second set of programming code (20) that determines available network resources of said network (16), the negotiation between the first set of programming code (18) and said second set of programming code (20) managed by a third set of programming code(22) that bases said negotiation on a trusted negotiated discipline (28).

2. The user interface (12) of claim 1 wherein said trusted negotiating discipline is selectable by a user of said first user interface (12) from a plurality of negotiating disciplines (28); and/or
wherein said requirements include the available hardware resources of said first user interface (12); and/or
wherein said requirements include the network resources needed by an application executing on said user interface (12); and optionally
wherein said application is voice telephony.

3. The user interface (12) of claim 1 wherein requirements include the costs that are to be assessed to said first user interface (12) during said communication; and/or
wherein said available network resources include presently available network resources; and/or
wherein said available network resources include a cost of the network resources to be consumed during said communication; and/or
wherein said available network resources include a prediction of network usage during said communication; and/or
wherein said first set of programming code is implemented using a software agent (18) programmed with instructions that represent the interests of said first user interface (12); and/or
wherein said third set of programming code is implemented as a negotiation manager software agent (22); optionally
wherein said second set programming code is implemented as a single network software agent (20).

4. The user interface (12) of claim 1, wherein said second set of programming code is implemented as multiple network software agents (20), each network software agent being respective to a different telecommunication service provider; and/or
wherein said communication is voice telephony; and/or
wherein said network (16) is an ATM network; and/or
wherein said negotiating discipline (18) includes at least one of a round robin, bid-and-ask, bluffing, poker and a reverse auction; and/or
wherein said negotiating discipline (18) terminates said negotiation if said negotiations fail to reach an agreement within a predetermined period of time.

5. A telecommunication network (20) comprising:
an interconnection means to connect a first user interface (12) with a second user interface (14); said interconnection means operable to consume a variable amount of network resources;
a computer processing hardware resource for executing a software application that processes a communication between said first user interface (12) and said second user interface (14) through said interconnection means;
a connection means for connecting said computer processing hardware resource to at least one computer processor and electronic memory means that is operable to execute a network set of programming code (20) for determining an available amount network resources, said network set of programming code (20) further for negotiating terms of said communication with a second set of programming code (18) that determines requirements for said communication of at least said first user interface (12), the negotiation between said network set of programming code (20) and said second set of programming code (18) managed by a third set of programming code (22) that bases said negotiation on a trusted negotiating discipline (28).

6. The telecommunication network (16) of claim 5, wherein said trusted negotiating discipline is selectable by a user of said first user interface (12) from a plurality of negotiating disciplines (28); and/or
wherein said requirements include the available hardware resources of said first user interface (12); and/or
wherein said requirements include the network resources needed by an application executing on said user interface (12); and/or
wherein said application is voice telephony; and/or
wherein requirements include the costs that are to be assessed to said first user interface (12) during said communication; and/or
wherein said available network resources include presently available network resources; and/or
wherein said available network resources include a cost of the network resources to be consumed during said communication.

7. The telecommunication network (16) of claim 5, wherein said available network resources include a prediction of network usage during said communication; and/or
wherein said first set of programming code is implemented using a software agent (18) programmed with instructions that represent the interests of said first user interface (12); and/or
wherein said third set of programming code is implemented as a negotiation manager software agent (22); and/or
wherein said second set programming code is implemented as a single network software agent (20); and/or
wherein said second set of programming code is implemented as multiple network software agents (20), each network software agent being respective to a different telecommunication service provider; and/or
wherein said communication is voice telephony; and/or
wherein said network (16) is an aTM network; and/or
wherein said negotiating discipline (18) includes at least one of a round robin, bid-and-ask, bluffing, poker and a reverse auction; and/or
wherein said negotiating discipline (18) terminates said negotiation if said negotiations fail to reach an agreement within a predetermined period of time.

8. An apparatus for managing a network comprising:
a connection means to connect a telecommunication network (16) and to connect to a first user interface (12) that is seeking to establish an interconnection with a second user interface (14) via said telecommunication network (16); and
a computer processor and electronic memory means attached to said connection means that is operable to execute a negotiation-management set of programming code (22) that manages a negotiation between a first-user interface set of programming code (18) and a network set of programming code (20), said first-user interface set of programming code for determining said first user interface's requirements for communicating with said second user interface (14) and representing said first-user interface's (12) interests during said negotiation, said network set of programming code (2) for determining available network resources and representing said set network's (16) interests during said negotiation, said negotiation-management set of programming code (22) basing said negotiation on a trusted negotiating discipline (28).

9. The apparatus according to claim 8, wherein said connection means is further operable to connect to said second user interface and said negotiation-management set of programming code (22) manages said negotiation so as to include a second-user interface set of programming code (14) for determining said first user interface's requirements for communicating with said first user interface (12) and representing said first-user interface's (12) interests during said negotiation; and/or
wherein said trusted negotiating discipline is selectable by a user of said first user interface (12) from a plurality of negotiating disciplines (28); and/or
wherein said requirements include the available hardware resources of said first user interface (12); and/or
wherein said requirements include the network resources needed by an application executing on said user interface (12).

10. The apparatus according to claim 8, wherein said application is voice telephony; and/or
wherein said requirements include the costs that are to be assessed to said first user interface (12) during said communication; and/or
wherein said available network resources include presently available network resources; and/or
wherein said available network resources include a cost of the network resources to be consumed during said communication; and/or
wherein said available network resources include a prediction of network usage during said communication; and/or
wherein said first user-interface set of programming code is implemented using a software agent (18) programmed with instructions that represent the interests of said first user interface (12); and/or
wherein said network-management set of programming code is implemented as a negotiation manager software agent (22); and/or
wherein said network set programming code is implemented as a single network software agent (20); and/or
wherein said network set of programming code is implemented as multiple network software agents (20), each network software agent (20) being respective to a different telecommunication service provider.

11. The apparatus according to claim 8, wherein said communication is voice telephony; and/or
wherein said network (16) is an ATM network; and/or
wherein said negotiating discipline (18) includes at least one of a round robin, bid-and-ask, bluffing, poker and a reverse auction; and/or
wherein said negotiating discipline (18) terminates said negotiation if said negotiations fail to reach an agreement within a predetermined period of time; and/or
wherein said negotiation is initiating said communication; and/or
wherein said communication is ongoing and said negotiation is for modifying terms of said existing communication.

12. A computer-implemented method for negotiating terms of communication between a first user interface (12) and a second user interface (14) connected by a telecommunications network (16), said method comprising the steps of:
receiving, from a first set of programming code (18) associated with said first user interface (12), an offer for said terms of communication, said first user interface's (12) offer including said first user interface's (12) requirements for communicating with said second user interface (14) through said network (16); verifying said first user interface's (12) offer conforms with a trusted negotiation discipline (28);
presenting said first user interface's (12) offer to a second set of programming code (20) associated with said network (16) if said first user interface's (12) offer conforms with said discipline (28);
receiving, from said second set of programming code (20); another offer for said terms of communication, said another offer including at least said network's (16) available resources for said communication, and including a modification of said first user interface's (12) offer;
returning said another offer to said first set of programming code (18) if said another offer conforms with said discipline (28);
repeating the foregoing steps if said offers conform with said discipline (28);
terminating said negotiating if any one of said offers and counteroffers fail to converge according to said negotiation discipline (28); and
notifying said first set of programming code (18) and said second set of programming code (20) of terms of any one of said offers and counteroffers that converge according to said negotiating discipline (28).

13. The computer-implemented method according to claim 12, wherein said offer is for initiating said communication; and/or
wherein said communication is ongoing and said offer is for modifying terms of said existing communication.
